# EUROPÄISCHE PATENTSCHRIFT

(11) **EP 0 467 042 B1**
(45) Veröffentlichungstag und Bekanntmachung des Hinweises auf die Patenterteilung: **16.03.1994**
(21) Anmeldenummer: 91108222.0
(22) Anmeldetag: 22.05.1991
(51) Int. Cl.: C21C 5/48, C21C 7/072

(54) **Verfahren zur Herstellung eines Spülsteins erhöhter Infiltrationsbeständigkeit mit gerichteter Porosität zur Anwendung in metallurgischen Schmelzgefässen**
Process for producing a gas purging brick with directional porosity and high infiltration resistance for metallurgical vessels
Procédé de fabrication d'un élément d'insufflation à porosité orientée et à résistance à l'infiltration pour récipients métallurgiques

(30) Priorität: 19.07.1990 DE 4022949
(43) Veröffentlichungstag der Anmeldung: 22.01.1992
(73) Patentinhaber: VEITSCH-RADEX AKTIENGESELLSCHAFT FÜR FEUERFESTE ERZEUGNISSE, A-1040 Wien (AT)
(72) Erfinder: Dötsch, Lorenz, W-5414 Vallendar (DE); Renfordt, Erich, W-5401 Urmitz (DE); Preyer, Helmut, Dipl.-Ing., W-5451 Kurtscheid (DE); Retrayt, Jean-Louis, W-5450 Neuwied (DE)
(74) Vertreter: Becker, Thomas, Dr., Dipl.-Ing.

(56) Entgegenhaltungen:
- EP-A- 0 146 079
- AT-B- 248 936
- DD-A- 95 023
- DE-A- 1 806 939
- DE-A- 1 938 803
- DE-A- 2 712 746
- DE-C- 821 023
- DE-C- 2 511 979
- US-A- 4 438 907
- PATENT ABSTRACTS OF JAPAN, Band 7, Nr. 118 (C-167)(1263), 21. Mai 1983; & JP-A-5839720 (SHIN NIPPON SEITETSU) 08.03.1983

## Beschreibung

Die Erfindung betrifft ein Verfahren zur Herstellung eines Gasspülsteins erhöhter Infiltrationsbeständigkeit mit gerichteter Porosität zur Anwendung in metallurgischen Schmelzgefäßen.

Derartige Spülsteine, die zur Zuführung von Gasen und/oder Feststoffen in metallurgische Schmelzen dienen, sind seit langem bekannt. Eine umfassende Übersicht gibt die RADEX-Rundschau, 1987, 288. In letzter Zeit haben sich insbesondere Gasspülsteine mit "gerichteter Porosität" durchgesetzt. Diese Spülelemente sind charakterisiert durch Kanäle innerhalb des feuerfesten, keramischen Matrixmaterials, die von der Gaszuführseite zur Gasaustrittsseite verlaufen.

Die Kanäle werden von einer zentralen Gaszuführung mit Gas, gegebenenfalls aber auch mit Gas-/Feststoffgemischen gespeist.

Obwohl sich derartige Gasspülsteine seit Jahren in großem Umfang bewährt haben wird im Rahmen zunehmender Qualitätsanforderungen auch der Wunsch nach Erhöhung der Infiltrationsbeständigkeit dieser Spüleinrichtungen gegen metallurgische Schmelzen geäußert.

Entsprechend liegt der Erfindung die Aufgabe zugrunde, einen Gasspülstein mit gerichteter Porosität anzubieten beziehungsweise ein entsprechendes Herstellungsverfahren zur Verfügung zu stellen, das zu Spülsteinen erhöhter Infiltrationsbeständigkeit führt.

Der Erfindung liegt die Erkenntnis zugrunde, daß eine verbesserte Infiltrationsbeständigkeit vor allem durch eine Imprägnierung des Matrixmaterials des Spülsteins (außerhalb der Porenkanäle) erreicht werden kann. Dabei hat die Erfindung erkannt, daß zu diesem Zweck besondere Maßnahmen getroffen werden müssen, um eine Infiltration des Infiltrationsmediums in die offenen Porenkanäle des zuvor hergestellten Spülsteins mit gerichteter Porosität zu verhindern.

In ihrer allgemeinsten Ausführungsform beschreibt die Erfindung ein Verfahren mit den Merkmalen des Anspruches 1. Vorteilhafte Ausführungsformen sind in den Unteransprüchen sowie den sonstigen Anmeldungsunterlagen angegeben.

Zunächst wird dem Verfahren ein auf konventionelle Weise hergestellter Spülstein mit gerichteter Porosität zugrundegelegt.

Je nach Herstellungsverfahren (gegossener oder gepreßter Spülstein) kann es notwendig sein, den Spülstein anschließend zu tempern (zum Beispiel bei Temperaturen zwischen 350 und 900 Grad Celsius), zu brennen (meist oberhalb 1200 Grad Celsius) oder zunächst zu tempern und anschließend zu brennen.

Der Spülstein wird danach einer Imprägnierungsbehandlung unterworfen, wobei wichtig ist, daß während der Imprägnierungsbehandlung die Porenkanäle temporär mit einem Material gefüllt sind, so daß das Imprägniermedium nur in das offene Porenvolumen des Matrixmaterials eindringen kann und dieses zumindest teilweise ausfüllt, während es nicht in die Porenkanäle eindringt, weil diese mit dem Material während der Imprägnierungsbehandlung ausgefüllt sind.

Die Imprägnierungsbehandlung erfolgt vorzugsweise unter Anwendung von Druck und/oder Vakuum in einem entsprechenden Behandlungsgefäß, wo die Spülsteine zum Beispiel eingetaucht werden.

Wird als Imprägniermedium zum Beispiel Pech oder Teer verwendet, ist es notwendig, die flüchtigen Bestandteile anschließend auszutreiben, weshalb der Spülstein anschließend zumindest getempert werden sollte. Auch während dieses Verfahrensschrittes bleiben die Porenkanäle vorläufig mit dem Material gefüllt, so daß das Imprägniermedium auch dann nicht in die Porenkanäle eindringen und diese verstopfen kann.

Erst danach wird das Material wieder aus den Porenkanälen entnommen. Der imprägnierte Spülstein ist dann einsatzbereit; bei Bedarf kann er anschließend aber auch noch gebrannt werden, insbesondere wenn er zuvor noch nicht gebrannt wurde.

Zur Ausführung der Imprägnierungsbehandlung schlägt die Erfindung verschiedene alternative Ausführungsformen vor.

Neben der erwähnten Teer- oder Pech-Tränkung, die in der Regel bei Temperaturen zwischen 150 und 250 Grad Celsius stattfindet kann aber auch eine mechanisch/physikalische Imprägnierungsbehandlung erfolgen.

Es wurde nämlich festgestellt, daß ein, thixotrope Eigenschaften aufweisender Schlicker, in kaltem Zustand, ebenso wie zum Beispiel erhitztes Pech, in einen mehr oder weniger niedrig viskosen Zustand überführt werden kann. Je nach Auswahl der Komponenten des Schlickers kann seine Viskosität dabei so abgesenkt werden, daß das offene Porenvolumen des Matrixmaterials des Spülsteins mehr oder weniger vollständig verfüllt wird, bevor - nach Abschaltung einer entsprechenden mechanischen/physikalischen Erregereinheit - der Schlicker aufgrund seiner thixotropen Eigenschaften wieder ansteift und das offene Porenvolumen (mit Ausnahme der Porenkanäle) danach zuverlässig verschließt.

Die Auswahl des thixotropen Schlickers erfolgt unter Berücksichtigung folgender Kriterien:
- die Korngröße des Feststoffanteils des Schlickers muß auf die Größe der zu verfüllenden Poren abgestellt werden, das heißt, sie muß kleiner sein. Im bevorzugten Bereich sollte die mittlere Teilchengröße der Feststoffkomponente des Schlickers maximal 1/5, vorzugsweise maximal 1/10 des mittleren Durchmessers der offenen Poren des Matrixmaterials des Spülsteins betragen. Je feiner das Schlickermaterial ist, umso vollständiger kann es auch kleinere Poren verfüllen. Bei einem mittleren Porendurchmesser von zum Beispiel 30 µm sollte der Feststoffanteil dann in einer Kornfraktion kleiner 3 µm vorliegen.
- Die Feuerfestkomponente ist vorzugsweise eine keramische Komponente, die basisch ist, wenn das Matrixmaterial des Spülsteins basisch ist beziehungsweise sauer ist, wenn ein saures Matrixmaterial zur Verfügung steht. Als Beispiele können mikronisierter Korund oder feinteiliger Magnesit angegeben werden. Natürlich können auch amphotere Stoffe eingesetzt werden.
- Zur Aufbereitung des Schlickers enthält dieser neben der feuerfesten keramischen Komponente auch eine gerüstbildende und/oder Flüssigkeitskomponente, die kohlenstoffhaltig sein soll und beispielsweise aus einem Harz bestehen kann. Die Kohlenstoff-Komponente des Harzes vercrackt bei einer anschließenden Temperaturbehandlung (Temperung) und bildet ein Kohlenstoff-Gerüst für die feuerfesten keramischen Partikel, was sich stabilitätserhöhung für das Imprägniermedium auswirkt.

Vorzugsweise enthält der Schlicker ein Zusatzmittel, das die thixotropen Eigenschaften verstärkt. Zu diesen Mitteln gehören beispielse Methylzellulose, aber auch andere Netzmittel wie Alkyl-, Aryl-, Polyoxiäthanol.

Die zur Verflüssigung des thixotropen Schlickers vorgesehenen mechanischen/physikalischen Erregereinheiten können beispielsweise mechanische Rüttler oder Ultraschalleinrichtungen sein. So können die zu imprägnierenden Produkte zum Beispiel in einen, mit dem Schlicker gefüllten Kessel eingelegt werden. Anschließend wird dann entweder die gesamte Einrichtung bewegt (gerüttelt) oder der Schlicker wird über eine Ultraschalleinrichtung physikalisch beaufschlagt, so daß auf jeden Fall das thixotrope Gerüst des Schlickers zusammenbricht und dieser in das offene Porenvolumen eindringen kann. Durch eine Druck-/Vakuumeinrichtung, wie sie aus dem Stand der Technik bekannt ist, kann die Imprägnierung zusätzlich unterstützt werden.

Der Vorteil dieses Imprägnierungsverfahrens besteht darin, daß die Imprägnierung im kalten Zustand erfolgt, also zum Beispiel bei Raumtemperatur. Hierdurch können Energiekosten eingespart werden. Eine nachfolgende Temperung zur Verdampfung der flüchtigen Bestandteile kann entfallen. Umweltbelastende Emissionen treten nicht auf.

Wie oben ausgeführt können aber auch Teer- oder Pech-Imprägnierungsverfahren eingesetzt werden, die in anderem Zusammenhang, zum Beispiel bei feuerfesten keramischen Steinen, bekannt sind.

Während der Imprägnierbehandlung sowie der gegebenenfalls sich anschließenden Temperung müssen die Porenkanäle - wie beschrieben - verfüllt sein, damit kein Imprägniermedium dort eindringt und die Kanäle verstopft. Zum Ausfüllen der Porenkanäle können unterschiedliche Materialien eingesetzt werden. Die Materialauswahl hat jedoch so zu erfolgen, daß keine unlösbare Verbindung des Materials mit dem keramischen Matrixmaterial des Spülsteins entsteht. Als Beispiele können angegeben werden: pulverförmige, inerte Stoffe, die in die Porenkanäle eingefüllt werden, wobei die offenen Enden der Porenkanäle dann abgedichtet werden, zum Beispiel durch Aufsetzen einer Platte. Ebenso können aber auch feste stab- oder streifenförmige Elemente eingesetzt werden, zum Beispiel aus Papier, Pappe, Kunststoff oder Metall. Um das spätere Herausziehen dieser Elemente zu erleichtern, können sie auf ihrer Oberfläche mit einem Gleitmittel beschichtet sein, zum Beispiel Wachs, Paraffin, Öl oder Graphit. Der Querschnitt dieser Elemente sollte gleich oder geringfügig kleiner als der Querschnitt der Porenkanäle sein, so daß sie einerseits die Porenkanäle vollständig ausfüllen, andererseits aber später wieder leicht entnehmbar sind. Zum Herausziehen der Elemente ist es - je nach verwendetem Material - vorteilhaft, diese zuvor zu erwärmen. Bei metallischen Elementen hat sich eine induktive Erwärmung als besonders vorteilhaft herausgestellt.

Das erfindungsgemäße Verfahren ermöglicht die Herstellung von Spülsteinen mit gerichteter Porosität, die gegenüber bekannten gattungsgleichen Spülelementen eine deutlich erhöhte Infiltrationsbeständigkeit aufweisen. Handelt es sich bei den Spülsteinen um gepreßte, insbesondere isostatisch gepreßte Spülsteine, wird die mechanische Stabilität und Infiltrationsbeständigkeit zusätzlich aufgrund der höheren Dichte des Matrixmaterials verbessert.

## Patentansprüche

1. Verfahren zur Herstellung eines Spülsteins erhöhter Infiltrationsbeständigkeit mit gerichteter Porosität zur Anwendung in metallurgischen Schmelzgefäßen mit folgenden Schritten:
1.1 aus einem feuerfesten keramischen Matrixmaterial wird ein Spülstein auf bekannte Art und Weise unter Ausbildung von gerichteten Porenkanälen, die zwischen dem gaseintritts- und gasaustrittseitigen Ende verlaufen, hergestellt;
1.2 der Spülstein wird anschließend gegebenenfalls getempert, gebrannt oder getempert und gebrannt;
1.3 der Spülstein wird danach einer Imprägnierungsbehandlung unterworfen, während der die Porenkanäle temporär mit einem Material gefüllt sind und das Imprägniermedium in das offene Porenvolumen des Matrixmaterials eindringt und dieses zumindest teilweise ausfüllt;
1.4 anschließend wird der imprägnierte Spülstein gegebenenfalls getempert, bevor
1.5 das Material danach aus den Porenkanälen wieder entfernt wird.

2. Verfahren nach Anspruch 1, bei dem als Spülstein ein gepreßter Spülstein eingesetzt wird.

3. Verfahren nach Anspruch 2, bei dem als Spülstein ein isostatisch gepreßter Spülstein eingesetzt wird.

4. Verfahren nach einem der Ansprüche 1 bis 3, bei dem die Temperung vor der Imprägnierungsbehandlung bei Temperaturen zwischen 350 und 900 Grad Celsius durchgeführt wird.

5. Verfahren nach einem der Ansprüche 1 bis 4, bei der als Imprägniermedium ein, tixotrope Eigenschaften aufweisender Schlicker aus einem feinteiligen, feuerfesten keramischen Material und einer kohlenstoff-haltigen Komponente eingesetzt wird.

6. Verfahren nach Anspruch 5 mit der Maßgabe, daß ein Schlicker eingesetzt wird, dessen Feststoffgehalt mindestens 40 Gew.-% beträgt.

7. Verfahren nach Anspruch 5 oder 6 mit der Maßgabe, daß ein Schlicker eingesetzt wird, dessen Feststoffanteil eine maximale Korngröße von 1/5 des mittleren Porendurchmessers des Spülsteins aufweist.

8. Verfahren nach Anspruch 7 mit der Maßgabe, daß ein Schlicker eingesetzt wird, dessen Feststoffanteil eine maximale Korngröße von 1/10 des mittleren Porendurchmessers des Spülsteins aufweist.

9. Verfahren nach einem der Ansprüche 5 bis 8 mit der Maßgabe, daß ein Schlicker eingesetzt wird, der ein Thixotropiermittel enthält.

10. Verfahren nach Anspruch 9 mit der Maßgabe, daß als Thixotropiermittel eine Methylzellulose verwendet wird.

11. Verfahren nach einem der Ansprüche 5 bis 10 mit der Maßgabe, daß als kohlenstoffhaltige Komponente ein Harz, beispielsweise ein Phenolharz oder ein Novolakharz eingesetzt wird.

12. Verfahren nach einem der Ansprüche 5 bis 11 mit der Maßgabe, daß die feuerfeste Komponente des Imprägniermediums für einen Spülstein aus einem basischem Matrixmaterial basisch beziehungsweise für einen Spülstein aus einem sauren Matrixmaterial sauer ist.

13. Verfahren nach einem der Ansprüche 5 bis 12, bei dem der Schlicker mittels einer mechanischen und/oder physikalischen Erregereinheit verflüssigt und, gegebenenfalls unter Anwendung von Druck und/oder Vakuum, in das offene Porenvolumen des Spülsteins eingebracht und nach Erreichen eines vorgegebenen Verfüllungsgrades die Erregereinheit unter gleichzeitigem Ansteifen des Imprägniermittels in den Poren abgeschaltet wird.

14. Verfahren nach einem der Ansprüche 1 bis 4 mit der Maßgabe, daß als Imprägniermedium eine kohlenstoffhaltige Komponente eingesetzt wird.

15. Verfahren nach Anspruch 14, bei dem als Imprägniermedium Pech oder Teer eingesetzt wird.

16. Verfahren nach Anspruch 14 oder 15 mit der Maßgabe, daß das Imprägniermedium in viskoser Form unter Druck und/oder Vakuum in das offene Porenvolumen des Matrixmaterials des Spülsteins eingebracht wird.

17. Verfahren nach einem der Ansprüche 1 bis 16 mit der Maßgabe, daß der imprägnierte Spülstein bei einer Temperatur getempert wird, bei der die flüchtigen Bestandteile des Imprägniermediums verdampfen.

18. Verfahren nach einem der Ansprüche 1 bis 17 mit der Maßgabe, daß die Porenkanäle während der Imprägnierungsbehandlung sowie der anschließenden Temperung mit einem entsprechend temperaturbeständigen Material gefüllt sind.

19. Verfahren nach einem der Ansprüche 1 bis 18 mit der Maßgabe, daß die Porenkanäle während der Imprägnierungsbehandlung sowie der sich gegebenenfalls anschließenden Temperung mit demselben Material gefüllt sind, das zur Ausformung der Porenkanäle bei der Herstellung des Spülsteins verwendet wurde.

20. Verfahren nach einem der Ansprüche 1 bis 18 mit der Maßgabe, daß ein Spülstein verwendet wird, dessen Porenkanäle vor der Imprägnierungsbehandlung erneut verschlossen werden.

21. Verfahren nach einem der Ansprüche 1 bis 20, bei dem während der Imprägnierungsbehandlung sowie gegebenenfalls bei der sich anschließenden Temperung die Porenkanäle mittels stab- oder streifenförmiger Elemente verschlossen sind, die anschließend wieder herausgezogen werden.

22. Verfahren nach Anspruch 21 mit der Maßgabe, daß die stab- oder streifenförmigen Elemente vor dem Herausziehen erwärmt werden.

## Claims

1. Process for producing a gas pursing plug with increased resistance to infiltration and oriented porosity for use in metallurgical melting crucibles, comprising the following steps:
1.1 a plug is manufactured from a refractory ceramic matrix material in a known manner, forming oriented pore canals, which extend between the gas inlet end and gas discharge end;
1.2 the plug is subsequently tempered if desired, fired, or tempered and fired;
1.3 the plug is subsequently subjected to an impregnating treatment, during which the pore canals are temporarily filled with a material, and the impregnating medium penetrates into the open pore volume of the matrix material and fills this at least partially;
1.4 the impregnated plug is subsequently tempered if desired before
1.5 the material is subsequently again removed from the pore canals.

2. Process in accordance with claim 1, in which a pressed plug is used as the plug.

3. Process in accordance with claim 2, in which an isostatically pressed plug is used as the plug.

4. Process in accordance with one of claims 1 to 3, in which the tempering is carried out at a temperature between 350°C and 900°C prior to the impregnating treatment.

5. Process in accordance with one of claims 1 to 4, in which a slip which possesses thixotropic properties and consists of a fine particulate refractory ceramic material and a carbon-containing component is used.

6. Process in accordance with claim 5, characterized in that a slip whose solids content is at least 40 wt.% is used.

7. Process in accordance with claim 5 or 6, characterized in that a slip whose solid component has a maximum particle size corresponding to 1/5 of the average pore diameter of the plug is used.

8. Process in accordance with claim 7, characterized in that a slip whose solid component has a maximum particle size corresponding to 1/10 of the average pore diameter of the plug is used.

9. Process in accordance with one of claims 5 to 8, characterized in that a slip containing a thixotropy-inducing agent is used.

10. Process in accordance with claim 9, characterized in that a methylcellulose is used as the thixotropy-inducing agent.

11. Process in accordance with one of claims 5 to 10, characterized in that a resin, e.g., a phenolic resin or a novolac resin, is used as the carbon-containing component.

12. Process in accordance with one of claims 5 to 11, characterized in that the refractory component of the impregnating medium for a plug made from a basic matrix material is basic and that for a plug made from an acidic matrix material is acidic.

13. Process in accordance with one of claims 5 to 12, in which the slip is liquefied by means of a mechanical and/or physical exciting unit and introduced into the open pore volume of the plug -- by applying pressure and/or vacuum if desired -- and the exciting unit is turned off after reaching the predetermined degree of filling, and the impregnating agent begins to stiffen at the same time.

14. Process in accordance with one of claims 1 to 4 characterized in that a carbon-containing component is used as the impregnating medium.

15. Process in accordance with claim 14, in which pitch or tar is used as the impregnating medium.

16. Process in accordance with claim 14 or 15, characterized in that the impregnating medium is introduced into the open pore volume of the matrix material of the plug in viscous form under pressure and/or vacuum.

17. Process in accordance with one of claims 1 to 16 characterized in that the impregnated plug is tempered at a temperature at which the volatile components of the impregnating medium evaporate.

18. Process in accordance with one of claims 1 to 17 characterized in that the pore canals are filled with a corresponding heat-resistant material during the impregnating treatment as well as the subsequent tempering.

19. Process in accordance with one of claims 1 to 18, characterized in that during the impregnating treatment and the subsequent tempering that may be performed, the pore canals are filled with the same material which was used to mold the pore canals during the manufacture of the plug.

20. Process in accordance with one of claims 1 to 19, characterized in that a plug whose pore canals are resealed prior to the impregnating treatment is used.

21. Process in accordance with one of claims 1 to 20, which during the impregnating treatment and the subsequent tempering that may be performed, the pore canals are closed with bar- or strip-shaped elements, which are subsequently extracted.

22. Process in accordance with claim 21, characterized in that the bar- or strip-shaped elements are heated prior to extraction.

## Revendications

1. Procédé de fabrication d'un élément d'insufflation à résistance à l'infiltration augmentée, avec une porosité orientée pour des récipients de fusion métallurgiques, comprenant les étapes suivantes :
1.1 Un élément d'insufflation est fabriqué de manière connue, à partir d'un matériau matrice céramique, en réalisant des canaux de pores orientés, s'étendant entre l'extrémité côté entrée des gaz et l'extrémité côté sortie des gaz;
1.2 L'élément d'insufflation est ensuite, le cas échéant, soumis à un revenu, cuit, ou revenu et cuit;
1.3 L'élément d'insufflation est ensuite soumis à un traitement d'imprégnation, pendant lequel les canaux de pores sont temporairement remplis avec un matériau et l'agent d'imprégnation pénétrant dans le volume ouvert des pores du matériau matrice et le remplissant au moins partiellement;
1.4 L'élément d'insufflation imprégné est ensuite, le cas échéant revenu, avant
1.5 que le matériau soit ensuite de nouveau enlevé des canaux de pores.

2. Procédé selon la revendication 1, dans lequel on utilise comme élément d'insufflation un élément d'insufflation compacté.

3. Procédé selon la revendication 2, dans lequel on utilise comme élément d'insufflation un élément d'insufflation ayant été compacté par pressage hydrostatique.

4. Procédé selon l'une des revendications 1 à 3, dans lequel le revenu est effectué avant le traitement d'imprégnation, à des températures comprises entre 350 et 900°C.

5. Procédé selon l'une des revendications 1 à 4, dans lequel on utilise comme agent d'imprégnation une barbotine présentant des propriétés thixotropiques, composée d'un matériau céramique réfractaire, finement divisé, et d'un composant contenant du carbone.

6. Procédé selon la revendication 5, caractérisé en ce que l'on utilise une barbotine dont la teneur en solides est d'au moins 40 % en poids.

7. Procédé selon la revendication 5 ou 6, caractérisé en ce qu'on utilise une barbotine dont la proportion de solides présente une granulométrie maximale de 1/5 du diamètre moyen des pores de l'élément d'insufflation.

8. Procédé selon la revendication 7, caractérisé en ce qu'on utilise une barbotine dont la proportion de solides présente une granulométrie maximale de 1/10 du diamètre moyen des pores de l'élément d'insufflation.

9. Procédé selon l'une des revendications 5 à 8, caractérisé en ce qu'on utilise une barbotine contenant un agent thixotropique.

10. Procédé selon la revendication 9, caractérisé en ce que l'agent thixotropique utilisé est la méthylcellulose.

11. Procédé selon l'une des revendications 5 à 10, caractérisé en ce que l'on utilise comme composant contenant du carbone une résine, par exemple , une résine phénolique ou une résine novolaque.

12. Procédé selon l'une des revendications 5 à 11, caractérisé en ce que le composant réfractaire de l'agent d'imprégnation pour un élément d'insufflation composé d'un matériau matrice basique est basique, respectivement que pour un élément d'insufflation composé d'un matériau matrice acide, il est acide.

13. Procédé selon l'une des revendications 5 à 12, dans lequel la barbotine est liquéfiée au moyen d'une unité excitatrice mécanique et/ou physique et, le cas échéant, en utilisant de la pression et/ou un vide, est introduite dans le volume de pores ouvert de l'élément d'insufflation et, après atteinte d'un degré de remplissage prédéterminé, l'unité excitatrice est mise hors d'action, pendant que se produit simultanément le figeage de l'agent d'imprégnation dans les pores.

14. Procédé selon l'une des revendications 1 à 4, caractérisé en ce que l'on utilise comme agent d'imprégnation un composant contenant du carbone.

15. Procédé selon la revendication 14, caractérisé en ce que l'on utilise comme agent d'imprégnation de la poix ou du goudron.

16. Procédé selon la revendication 14 ou 15, caractérisé en ce que l'agent d'imprégnation est introduit dans le volume ouvert de pores du matériau matrice de l'élément d'insufflation sous forme visqueuse, sous pression et/ou sous vide.

17. Procédé selon l'une des revendications 1 à 16, caractérisé en ce que l'élément d'insufflation imprégné est revenu à une température à laquelle les composants volatils de l'agent d'imprégnation se vaporisent.

18. Procédé selon l'une des revendications 1 à 17, caractérisé en ce que les canaux de pores sont remplis pendant le traitement d'imprégnation ainsi que pendant le revenu subséquent avec un matériau présentant une résistance à la température correspondante.

19. Procédé selon l'une des revendications 1 à 18, caractérisé en ce que les canaux de pores sont remplis pendant le traitement d'imprégnation ainsi que pendant le revenu le cas échéant subséquent avec le même matériau que celui utilisé pour créer les canaux de pores lors de la fabrication de l'élément d'insufflation.

20. Procédé selon l'une des revendications 1 à 18, caractérisé en ce que l'on utilise un élément d'insufflation dont les canaux de pores sont de nouveau obturés avant d'effectuer le traitement d'imprégnation.

21. Procédé selon l'une des revendications 1 à 20, dans lequel, pendant le traitement d'imprégnation, ainsi que le cas échéant, lors du revenu subséquent, les canaux sont obturés au moyen d'éléments en forme de barres ou de bandes, qui sont ensuite de nouveau enlevés.

22. Procédé selon la revendication 21, caractérisé en ce que les éléments en forme de barres ou de bandes sont chauffés avant extraction.
